(19) Europäisches Patentamt / European Patent Office / Office européen des brevets

(11) **EP 3 901 663 A1**

(12) **EUROPÄISCHE PATENTANMELDUNG**

(43) Veröffentlichungstag:
   **27.10.2021 Patentblatt 2021/43**

(21) Anmeldenummer: **21166879.3**

(22) Anmeldetag: **06.04.2021**

(51) Int Cl.:
   **G01S 17/89** (2020.01)       **G01S 17/931** (2020.01)
   **G05D 1/00** (2006.01)

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**
   Benannte Validierungsstaaten:
   **KH MA MD TN**

(30) Priorität: **22.04.2020 DE 102020205064**

(71) Anmelder: **Robert Bosch GmbH**
   **70442 Stuttgart (DE)**

(72) Erfinder: **Haug, Florian**
   **71254 Ditzingen (DE)**

(54) **VERFAHREN ZUR REDUZIERUNG VON MEHRDEUTIGKEITEN BEI DER REPRÄSENTATION UND REGISTRIERUNG VON PUNKTWOLKEN UNTER VERWENDUNG VON LASERSCANNERN**

(57) Offenbart ist ein Verfahren zur Reduzierung von Mehrdeutigkeiten bei der Repräsentation und Registrierung von Punktwolken. Dabei werden die Punktwolken von mindestens einem Laserscanner erzeugt oder aus einer Navigationskarte extrahiert. Jeweils eine erste Punktwolke und eine zweite Punktwolke werden als Eingangsgrößen empfangen. Das Verfahren umfasst die Schritte:

a) Bestimmen von Oberflächennormalen (24, 25, 26, 27) an den Punkten der ersten Punktwolke (7) und an den Punkten der zweiten Punktwolke,

b) Bestimmen einer Repräsentation der ersten Punktwolke, umfassend folgende Teilschritte:

i) Unterteilen der ersten Punktwolke (7) in Zellen (9, 10, 11, 12),

   ii) Gruppieren der Punkte der jeweiligen Zelle (9, 10, 11, 12) auf Basis der Oberflächennormalen (24, 25, 26, 27) an den Punkten der ersten Punktwolke (7),

iii) Ermitteln der Normalverteilung für die Punkte der jeweiligen Gruppe in jeder Zelle, und

c) Registrieren der zweiten Punktwolke an die ersten Punktwolke (7) auf Basis der Repräsentation.

   Der Kern des Verfahrens ist die Einführung einer zusätzlichen Variablen in Form von Oberflächennormalen in dem Normal-Distribution Transformation-Ansatz (NDT), insbesondere durch Schritt a) und Teilschritt ii). Es handelt sich um eine Erweiterung des normalen NDT-Verfahrens, wodurch die Repräsentation einer Punktwolke, insbesondere in einer Zelle, präziser, und die Registrierung von Punktwolken physikalisch sinnvoller ist. Das Verfahren ist besonders vorteilhaft für die laserdatenbasierte Mapping-Fahrt einer autonomen Arbeitsmaschine, wodurch die fehlerhafte Erkennung von Innen- und Außenwänden sowie von Ecken ohne Verzicht auf Lokalisierungseffizienz möglichst vermieden wird.

**Fig. 4**

**Beschreibung**

In der modernen Fabrik bzw. der Industrie 4.0 werden immer mehr autonome Arbeitsmaschinen in der Intralogistik oder in Produktionsumgebungen eingesetzt, welche sensordatenbasiert selbstständig fahren können.

Die Gewinnung von Sensordaten für den sensordatenbasierten selbstständigen Fahrbetrieb derartiger autonomer Arbeitsmaschinen kann beispielsweise mithilfe von Laserscannern realisiert werden. Solche Laserscanner können eine oder mehrere Ebenen der Umgebung der autonomen Arbeitsmaschinen scannen sowie über die Laufzeit des ausgesendeten Laserstrahls die Abstände zu Objekten messen. Diese Informationen lassen sich über die bekannten Raumrichtungen der Laserstrahlen zu Punktwolken überführen.

Die Punktwolken werden beispielsweise während einer (Mapping-) Fahrt aus verschiedenen Blickwinkeln und/oder von verschiedenen Orten erfasst und dann mit den ermittelten Versätzen in ein gemeinsames Koordinatensystem überführt und miteinander ausgerichtet. Auf diese Art kann die Umgebung vollständig erfasst werden. Die Ermittlung der Versätze wird hier als Registrierung bezeichnet. Diese Registrierung kann im Rahmen der Erzeugung von Kartendaten der Umgebung erfolgen. Die Registrierung kann aber auch erfolgen, um anhand von gewonnen Sensordaten festzustellen, an welcher Position der Laserscanner mit dem die Sensordaten ermittelt sich befindet, indem die Sensordaten anhand von Kartendaten registriert werden. Diesen Vorgang bezeichnet man als Lokalisierung.

Die Aufgabe der Registrierung ist es einerseits eine effiziente Repräsentation (bzgl. Speicherbedarf und Modellierungsgenauigkeit) der mit Laserscannern als Sensordaten erfassten Punktwolken zu realisieren, und andererseits eine effiziente (bzgl. Rechenaufwand und Genauigkeit) Registrierung bzgl. der gewählten Repräsentation zwischen zwei (beliebigen, aber überlappenden) Punktwolken zu ermöglichen.

Ein bekannter Ansatz zur Registrierung ist die Normal-Distribution-Transformation (NDT), welche sowohl eine Repräsentation von Punktwolken definiert als auch eine Methode zur Registrierung von Punktwolken inkl. der Schätzung von Unsicherheiten als auch ein Gütemaß (Score) definiert. Bei diesem Verfahren wird ein Raum in welchem sich die Punkte der Punktwolke befinden in Zellen aufgeteilt. Für die Punkte in der jeweiligen Zelle wird eine Normalverteilung berechnet und anschließend weiter verarbeitet. Die Repräsentation mittels des NDT-Ansatzes kann sehr recheneffizient implementiert werden, liefert genaue Ergebnisse der Registrierung und ermittelt implizit einen Score-Parameter sowie die Schätzung der Unsicherheiten. Sie hat daher viele nützliche Eigenschaften, um sie in einem Pose-Graph-Framework einzusetzen und wird daher von vielen Laser-Lokalisierungs-Systemen (LLS) verwendet.

Allerdings besitzt der NDT-Ansatz neben den oben genannten Vorteilen einige Schwächen, insbesondere in der Repräsentation einer Punktwolke innerhalb einer Zelle, falls diese durch eine Normalverteilung nur ungenügend modelliert werden kann. Es hat sich in der Praxis heraus gestellt, das die Normalverteilung in bestimmten Fällen nicht geeignet ist die Punkte in der jeweiligen Zelle für die Registrierung ausreichend präzise zu modellieren.

Eine weitere Schwäche des NDT-Ansatzes besteht in der Möglichkeit, physikalisch sinnvolle Registrierungen von unmöglichen zu unterscheiden. Diese Möglichkeit ist gegebenenfalls beim NDT-Ansatz nicht ausreichend vorhanden. Hintergrund dieser Einschränkungen des NDT-Ansatzes ist, dass jeder Punkt eines Laserscanners durch Reflektion an einem Objekt entsteht und diese Reflektion bzw. dieser Punkt nicht von der gegenüberliegenden Seite durch das Objekt hindurch beobachtet werden kann. In der Praxis führt diese Problematik z. B. dazu, dass bei der Verwendung der klassischen NDT versehentlich während der Mapping-Fahrt eine Innenwand auf eine Außenwand gelegt wird und die Karte daher Fehler enthält.

Hiervon ausgehend wird hier ein besonders vorteilhaftes Verfahren zur Reduzierung von Mehrdeutigkeiten bei der Repräsentation und Registrierung von Punktwolken unter Verwendung von Laserscannern bei einem Lokalisierungssystem beschrieben.

Hier beschrieben wird ein Verfahren zur Reduzierung von Mehrdeutigkeiten bei der Repräsentation und Registrierung von Punktwolken, wobei die Punktwolken von mindestens einem Laserscanner erzeugt oder aus einer Navigationskarte extrahiert werden, und wobei jeweils eine erste Punktwolke und eine zweite Punktwolke als Eingangsgrößen empfangen werden, umfassend zumindest folgende Schritte:

a) Bestimmen von Oberflächennormalen an den Punkten der ersten Punktwolke und an den Punkten der zweiten Punkwolke,
b) Bestimmen einer Repräsentation der ersten Punktwolke umfassend folgende Teilschritte:

i) Unterteilen der ersten Punktwolke in Zellen,
ii) Gruppieren der Punkte der jeweiligen Zelle auf Basis der Oberflächennormalen an den Punkten der ersten Punktwolke,
iii) Ermitteln der Normalverteilung für die Punkte der jeweiligen Gruppe in jeder Zelle, und

c) Registrieren der zweiten Punktwolke an die ersten Punktwolke auf Basis der Repräsentation.

Das beschriebene Verfahren kann in autonomen Arbeitsmaschinen für die Intralogistik bzw. Produktionsumgebungen eingesetzt werden, um mit Laserscannern gewonnene Eingangsdaten auszuwerten. Es ist besonders vorteilhaft für die laserdatenbasierte Mapping-Fahrt einer autonomen Arbeitsmaschine, wodurch die fehlerhafte Erkennung von Innen- und Außenwänden sowie von Ecken ohne Verzicht auf Lokalisierungseffizienz möglichst vermieden wird.

Der Kern des beschriebenen Verfahrens ist die Einführung einer zusätzlichen Variablen in Form von Oberflächennormalen in dem Normal-Distribution Transformation-Ansatz (NDT). Dies wird insbesondere durch Schritt a) und Teilschritt ii) beschrieben. Dabei handelt es sich um eine Erweiterung des normalen NDT-Verfahrens, wodurch die Repräsentation einer Punktwolke, insbesondere in einer Zelle, präziser, und die Registrierung von Punktwolken physikalisch sinnvoller ist. Weil hier das NDT-Verfahren unter Berücksichtigung von Oberflächennormalen durchgeführt wird, wird das beschriebe Verfahren als ONDT-Verfahren (Oberflächennormalen Normal Distribution Transformation) bezeichnet. Dementsprechend wird als ONDT-Repräsentation bezeichnet, wenn die Punktwolke durch das ONDT-Verfahren repräsentiert wird.

Zur Lokalisierung sind eine Navigationskarte der Umgebung und ein Lokalisierungssystem, umfassend mindestens einen Laserscanner, erforderlich. Dabei sendet der mindestens eine Laserscanner Laserstrahlen aus, welche punktweise die Umgebung des mindestens einen Laserscanners abtasten und von Objekten reflektiert werden. Teile der reflektierten Strahlen werden von dem mindestens einen Laserscanner wieder aufgefangen und in Form von Punktwolken erfasst. Dadurch wird die Umgebung von den erfassten Punktwolken repräsentiert. Darüber hinaus versucht das Lokalisierungssystem durch einen kontinuierlichen Abgleich der erfassten Punktwolken (d. h. der Umgebung) mit der Navigationskarte den wahrscheinlichsten Standort zu ermitteln. Häufig wird die Navigationskarte in einem Mapping-Prozess ebenfalls durch das Lokalisierungssystem generiert.

Die Punktwolken werden normalerweise aus verschiedenen Blickwinkeln und/oder von verschiedenen Orten der zu mappenden Umgebung erfasst, von denen typischerweise zwar keine die gesamte Umgebung erfasst, die sich aber als Bedingung zumindest teilweise überlappen. Um die Umgebung vollständig zu erfassen, führt das Lokalisierungssystem mittels der überlappenden Regionen eine paarweise Registrierung zwischen den verschiedenen Punktwolken durch und baut damit ein Netz von paarweise verbunden Punktwolken.

Die paarweise Registrierung meint hier insbesondere, dass jeweils zwei Punktwolken ausgewählt werden, die typischerweise zumindest teilweise eine überlappende Region besitzen und durch translatorischen und/oder rotatorischen Versatz in ein gemeinsames Koordinatensystem übergeführt und zueinander ausgerichtet werden. Registrierung bedeutet in diesem Zusammenhang deren translatorischen und/oder rotatorischen Versatz zu schätzen. Es ist auch denkbar, dass mehrere paarweise Registrierungen auf der Ausführungsebene von Rechenmaschinen gleichzeitig parallel durchgeführt werden.

Bei der paarweisen Registrierung kann eine Punktwolke als Referenzpunktwolke ausgewählt, und die andere Punktwolke an die Referenzpunktwolke registriert werden. Hier bezeichnet man die Referenzpunktwolke als erste Punktwolke und die andere Punktwolke als zweite Punktwolke.

Die erste Punktwolke und die zweite Punktwolke können durch den mindestens einen Laserscanner erfasst werden, somit wird die Umgebung durch die Registrierung beider Punktwolken vollständig erfasst. Die erste Punktwolke kann aber auch aus einer Navigationskarte extrahiert, und die zweite Punktwolke durch den mindestens einen Laserscanner erfasst werden. Somit wird der Standort durch die Registrierung beider Punktwolke ermittelt.

Zur Durchführung des hier beschriebenen ONDT-Verfahrens werden vor allem in Schritt a) die Oberflächennormalen sowohl an den Punkten der ersten Punktwolke als auch an den Punkten der zweiten Punktwolke bestimmt. Eine Oberflächennormale meint hier insbesondere einen Normalenvektor, der senkrecht auf der (allg. gekrümmten), näherungsweise aber ebenen Fläche in einer kleinen Umgebung um einen Punkt steht und in Richtung des Sensorursprunges ausgerichtet ist. D. h. die Oberflächennormale des Punktes zeigt in die Richtung, von dem aus der Laserscanner zur Bildung dieses Punktes Strahlen abgefeuert hat. Dadurch ist die Oberflächennormale des Punktes beispielweise gemäß dem Scanvorgang des mindestens einen Laserscanners eindeutig bestimmbar. Es kann für jeden Punkt eine Oberflächennormale bestimmt werden. Zusätzlich ist es auch denkbar, dass die Normalenvektoren über mehrere Punkte geglättet werden. Dieser Ansatz lässt sich einfach auf den 3D-Fall erweitern.

Nach Bestimmung der Oberflächennormalen wird die erste Punktwolke in Schritt b) durch ONDT repräsentiert. Für das ONDT-Verfahren wird der Bereich der ersten bzw. der zweiten Punktwolke in Teilschritt i) in Zellen $Z_j$ unterteilt (im allg. ist jede Partition des Raumes möglich, inkl. adaptiven, die auf Basis der Punktwolke eine möglichst optimale Partition ermitteln) welche überlappen können, aber nicht zwingend müssen. Die Größe einer Zelle $Z_j$ hängt sehr stark von der Anwendung ab und bewegt sich typischerweise zwischen 10cm-5m im Durchmesser.

Hierbei wird das Notationsverfahren für unterschiedliche Variablen derart definiert, dass der erste Buchstabe Z einer Variablen-Größe entspricht und die weiteren Buchstaben (u. a. i, j, k, o, n) Indizes entsprechen. Dabei gehören die weiteren Buchstaben als Indizes zu natürlichen Zahlen. So bedeutet beispielsweise $Z_j$ *die j*-te Zelle und $p_{ij}$ der *i*-te Punkt in *der j*-ten Zelle.

Weiter werden in Teilschritt ii) die Punkte $p_{ij}$ in jeder Zelle $Z_j$ gemäß ihrer Oberflächennormalen gruppiert, wobei die Oberflächennormalen an den Punkten innerhalb jeder Gruppe $Z_{jo}$ in gleicher Richtung unter einer tolerierten Abweichung beispielsweise von 10° ausgerichtet sind. Dies ist ein zusätzlicher neuer Schritt im Vergleich mit dem herkömmlichen NDT-Verfahren, wodurch die Punkte mithilfe ihrer Oberflächennormalen physikalisch sinnvoller repräsentiert werden können. Dies ist besonders vorteilhaft für die Erkennung/Erfassung von Innen- und Außenwänden sowie Innen- und Außenecken der repräsentierten Umgebung.

In Teilschritt iii) wird die Normalverteilung für die Punkte der jeweiligen Gruppe in jeder Zelle ermittelt. Dies ist eine Abweichung im Vergleich zum herkömmlichen NDT-Verfahren. Mittels des herkömmlichen NDT-Verfahrens wird die Normalverteilung für alle Punkte innerhalb einer Zelle ermittelt, daher gibt es maximal nur eine Normalverteilung innerhalb jeder Zelle, wodurch die Punktwolken von Innen- und Außenwänden sowie Innen- und Außenecken innerhalb einer Zelle ungenügend repräsentiert werden.

Hier werden mittels des ONDT-Verfahrens die Punkte in mehrere Gruppen je nach ihren unterschiedlichen Oberflächennormalen innerhalb einer Zelle weiter unterteilt, sodass sich dementsprechend mehrere Normalverteilungen innerhalb einer Zelle ergeben. Die Normalverteilung zeigt intuitiv einen Bereich, in dem ein Punkt mit hoher Wahrscheinlichkeit vorkommt, und zwar je näher der Punkt an der Mitte des Bereiches steht, desto höher ist die Wahrscheinlichkeit. Mittels des ONDT-Verfahrens können solche Bereiche eine Punktwolke feiner und präziser als beim NDT-Verfahren repräsentieren. Somit lässt sich durch die Verwendung von mehreren Normalverteilungen innerhalb einer Zelle die tatsächliche Punktwolke deutlich genauer repräsentieren. Dies gilt insbesondere für in der Praxis häufig auftretenden Fälle wie Innen- und Außenecken, Innen- und Außenwände in einer Zelle usw. Schlussendlich wird in Schritt c) die Registrierung durchgeführt, wobei die erste Punktwolke bzw. die zweite Punktwolke gemäß einer Transformationsfunktion an die ONDT-Repräsentation transformiert wird. Aufgabe der Registrierung ist im Wesentlichen die Transformationsfunktion, oder anders ausgedrückt, den translatorischen und/oder rotatorischen Versatz zu finden, damit die beiden Punktwolken in ein gemeinsames Koordinatensystem überführt und zueinander ausgerichtet werden können. Darüber hinaus dienen die ermittelten stückweisen Normalverteilungen einerseits zur Ermittlung der Transformationsfunktion und andererseits zur Bewertung, wie gut die zweite Punktwolke an die erste Punktwolke registriert wird (Score).

Wie oben beschrieben können Mehrdeutigkeiten bei der Repräsentation und der Registrierung von Punktwolken mittels der zusätzlichen Information der Oberflächennormalen reduziert werden. Die Information der Oberflächennormalen lässt sich sehr einfach und robust aus Punktwolken von Laserscannern rekonstruieren, da aufgrund des Scanvorgangs die jeweiligen Punktnachbarn bekannt sind. Eine Verwendung für 2D oder 3D Punktwolken ist möglich. Insbesondere lässt sich die zusätzliche Information der Oberflächennormalen in den bestehenden NDT-Ansatz unter Beibehaltung vieler Vorteile wie die recheneffiziente Registrierung inkl. Score und Schätzung der Unsicherheit, sowie die effiziente Speicherung einfach und gut integrieren.

In einer bevorzugten Ausführungsform wird in Schritt a) eine Oberflächennormale an jeden Punkt der ersten Punktwolke und der zweiten Punktwolke bestimmt, wobei die Oberflächennormale eines Punktes derart bestimmt wird, dass die Oberflächennormale des Punktes senkrecht zum Tangentialvektor des Punktes steht, welcher ausgehend von diesem Punkt zu seinem nachfolgenden Punkt ausgerichtet ist.

Gemäß dem bekannten Scanvorgang werden hier für jeden Punkt sein Nachfolger bestimmt, somit wird der Tangentialvektor zwischen den beiden Punkten gebildet. Der senkrecht darauf stehende Vektor, der in Richtung des Sensorursprungs zeigt, entspricht dem Normalenvektor, der die Richtung der Oberflächennormalen repräsentiert. Bei Sprüngen kann auch der Vorgänger des Punktes gewählt werden, falls dieser sich näher am Bezugspunkt befindet als der Nachfolger. Optional können die Normalenvektoren über mehrere Punkte geglättet werden. Dieser Ansatz lässt sich einfach auf den 3D-Fall erweitern.

In einer weiteren bevorzugten Ausführungsform werden in Teilschritt ii) die Punkte der jeweiligen Zelle derart gruppiert, dass ein Orientierungsraum gleichförmig in verschieden Ankerrichtungen in Teilorientierungsräume unterteilt wird, und die Punkte auf Basis ihrer Oberflächennormalen in verschiedene Teilorientierungsräume aufgeteilt werden.

Besonders vorteilhaft ist, wenn der jeweilige Punkt basierend auf Winkeldistanzen zwischen seiner Oberflächennormale und Ankerrichtungen in mindestens einen Teilorientierungsraum aufgeteilt wird.

Anstatt über alle Punkte innerhalb einer Zelle mittels des NDT-Verfahrens die Normalverteilung zu schätzen, werden die Punkte hierbei in Abhängigkeit ihrer Oberflächennormale (Normalenvektoren) $n_{ij}$ in verschiedene Teilorientierungsräume $Z_{jo}$ aufgeteilt. Manche dieser Teilorientierungsräume $Z_{jo}$ können auch leer sein, falls sich kein Punkt mit zugehöriger Oberflächennormale in der Zelle $Z_j$ befindet.

Einen Orientierungsraum in Zusammenhang mit Ankerrichtungen kann man sich im einfachsten Fall über die vier Himmelsrichtungen vorstellen, wobei der Orientierungsraum in vier Himmelsrichtungen "N" (Nord), "O" (Ost), "S" (Süd), "W" (West) in vier Teilorientierungsräumen untergeteilt wird. Wenn die Oberflächennormalen an den Punkten innerhalb einer Zelle beispielsweise teilweise nach Norden und teilweise nach Süden ausgerichtet sind, so ergeben sich zwei Gruppen von Punkten innerhalb der Zelle. Davon ist eine Gruppe von Punkten mit ihren Oberflächennormalen nach Norden und eine Gruppe von Punkten mit ihren Oberflächennormalen nach Süden ausgerichtet.

Davon ausgehend ist es denkbar, dass eine fixe Anzahl m an starren Ankerrichtungen $o_1$ ,...,$o_m$ definiert wird, und dann der Orientierungsraum möglichst gleichförmig in verschiedene Ankerrichtungen in m Teilorientierungsräumen unterteilt wird. Somit weist jeder Teilorientierungsraum eine eigene Ankerrichtung auf. In einem 2D-Modus können die

Ankerrichtungen beispielsweise in m verschiedene Richtungen mit Winkel 0*360°/m, 1*360/m°,..., (m-1)*360/m° definiert werden. In einem 3D-Modus ist dies aufgrund des kugelförmigen Richtungsraums deutlich schwieriger und nur für bestimmte Werte von m sinnvoll. Eine Möglichkeit ist die Eckpunkte oder Flächenmittelpunkte der plantonischen Körper Tetraeder, Würfel, Oktaeder, Ikosaeder oder Dodekaeder zu verwenden. Reicht die Anzahl m der Eckpunkte/Flächenmittelpunkte nicht aus, so können mittels weiterer Unterteilungen der genannten Körper (wie den geodätischen Domen) approximative Lösungen mit höheren Werten von m ermittelt werden. Sind die Ankerrichtungen bekannt, wird ein Punkt $p_{ij}$ mit seiner Oberflächennormale $n_{ij}$ derjenigen Gruppe $Z_{jo}$ zugeordnet, bei welchem der Innenwinkel zwischen der Ankerrichtung $o_m$ der Gruppe und $n_{ij}$ am kleinsten ist. Dabei ist die Gewichtung $w_{ijo}$ gleich eins($w_{ijo}$ = 1).

Im Fall, dass sich die Oberflächennormale $n_{ij}$ an einem Punkt $p_{ij}$ zwischen mehreren benachbarten Ankerrichtungen befindet, ist es denkbar, dass der Punkt $p_{ij}$ mittels unterschiedlicher Gewichtung in unterschiedlichen Gruppen zugeordnet wird (d. h. $w_{ijo} \neq 1$). Das Vorgehen unterscheidet sich zum obigen Verfahren nur im letzten Schritt. Anhand nur den nächsten Nachbarn zu berücksichtigen werden die nächsten Ankerrichtungen berücksichtigt und der Punkt $p_{ij}$ je nach Abstand bzw. Größe des Innenwinkels unterschiedlich gewichtet all den zugehörigen Gruppen $Z_{jo}$ zugeordnet.

Im 2D-Modus kann z. B. eine lineare Interpolation realisiert werden: sei die Winkeldistanz d zwischen zwei benachbarten Ankerrichtungen $o_{m-1}$ und $o_m$ , der Innenwinkel einer dazwischenliegenden oberflächennormale $n_{ij}$ zu $o_{m-1}$ gleich $a_{ijo_{m-1}}$, sowie zu $o_m$ gleich $a_{ijo_m}$ mit $a_{ijo_{m-1}} + a_{ijo_m} = d$, so entsprechen die Gewichtung für den Punkt $p_{ij}$ in der Gruppe $Z_{jo_{m-1}}$ gleich

$$w_{ijo_{m-1}} = 1 - \frac{a_{ijo_{m-1}}}{d}$$ und der Gruppe $Z_{jo_m}$ gleich $$w_{ijo_m} = 1 - \frac{a_{ijo_m}}{d}.$$

Außerdem ist es denkbar, dass die Punkte der jeweiligen Zelle auf Basis von Clusterverfahren gruppiert werden. Hierbei wird eine adaptive Anzahl an adaptiven Ankerrichtungen verwendet. Im flexibelsten Fall wird die Anzahl m an dominierenden Richtungen pro Zelle über Clusterverfahren ermittelt, deren Ankerrichtungen $o_1,...,o_m$ bestimmt und die Zuordnung mittels Nächstem-Nachbar oder mittels unterschiedlicher Gewichtung wie oben beschrieben verwendet.

In einer weiteren bevorzugten Ausführungsform werden in Teilschritt iii) ein Mittelwert $q_{jo}$ und eine Kovarianzmatrix $C_{jo}$ für die Punkte $p_{ijo}$ der jeweiligen Gruppe in jeder Zelle ermittelt Hierbei lässt sich der Mittelwert $q_{jo}$ über alle $p_{ijo}$ wie folgt berechnen:

$$q_{jo} = \frac{1}{n_o} \cdot \sum\nolimits_{p_{ijo}} w_{ijo} \cdot p_{ijo} \qquad (1)$$

Dabei entspricht $q_{jo}$ dem Mittelwert q für die o-ten Gruppe in der *j*-ten Zelle der darin enthaltenen Punkte, $p_{ijo}$ dem i-ten Punkt in der o-ten Gruppe der *j*-ten Zelle, $w_{ijo}$ der Gewichtung des i-ten Punktes in der o-ten Gruppe der *j*-ten Zelle, und $n_o$ der Summe alle Gewichtungen $w_{ijo}$.

Die Gewichtung $w_{ijo}$ ist wie weiter oben beschrieben abhängig von dem Gruppierungsverfahren und kann im einfachsten Fall $w_{ijo}$ = 1 entsprechen.

Weiter lässt sich die Kovarianzmatrix $C_{jo}$ über alle $p_{ijo}$ basierend auf dem vorab ermittelten Mittelwert $q_{jo}$ wie folgt berechnen:

$$C_{jo} = \frac{c}{n_o} \cdot \sum\nolimits_{p_{ijo}} w_{ijo} \cdot \left(p_{ijo} - q_{jo}\right) \cdot \left(p_{ijo} - q_{jo}\right)^{\mathrm{T}} \qquad (2)$$

Dabei entspricht $C_{jo}$ der Kovarianzmatrix C für die o-ten Gruppe in der *j*-ten Zelle der darin enthaltenen Punkte, *c* einem anwendungsspezifischen Skalierungsfaktor (z. B. 1-2) und T dem Transponieren-Operator.

Um eine aussagekräftige Kovarianzmatrix zu erhalten sind dazu mindestens drei Punkte notwendig. Enthält eine Gruppe nicht mindestens drei Punkte, wird die Gruppe als leer definiert.

In einer weiteren bevorzugten Ausführungsform wird in Schritt c) für jede in Teilschritt (iii) ermittelte Normalverteilung eine Bewertungsfunktion ermittelt, welche die Güte der Registrierung liefert.

Hierbei lässt sich die Bewertungsfunktion für die Registrierungsgüte nach Transformation *T(P2)* der zweiten Punktwolke bzgl. der ONDT Repräsentation (der ersten Punktwolke) über alle transformierten Punkte $t_{ijo}$ wie folgt berechnen:

$$score\left(T(P2)\right) = \sum\nolimits_{t_{ijo}} w_{ij} \cdot w_{ijo} \cdot \exp\left(-0{,}5 \cdot \left(t_{ijo} - q_{jo}\right)^T \cdot C_{jo}^{-1} \cdot \left(t_{ijo} - q_{jo}\right)\right) \qquad (3)$$

dabei entspricht *score* (*T(P2)*) der Bewertungsfunktion mit der Variablen *T(P2)* und $w_{ij}$ der Gewichtung des i-ten Punktes der zugeordneten *j*-ten Zelle.

Die Variable *T(P2)* bedeutet eine Transformationsfunktion T (.) der zweiten Punktwolke P2. Wenn beispielsweise die zweite Punktwolke gemäß einer Transformationsfunktion an die erste Punktwolke transformiert (d. h. registriert), wird ein Score nach der Gleichung (3) berechnet. Dies entspricht der negierten Summe der Wahrscheinlichkeiten, mit denen Punkte aus der zweiten Punktwolke, mit denen in der ersten Punktwolke korrelieren.

Aufgabe des Registrierungsprozesses bei dem ONDT-Verfahren ist es, diejenige Transformation T(.) zwischen der zweiten Punktwolke P2 und der ONDT-Repräsentation der ersten Punktwolke zu finden, welche den Score über alle Punkte der zweiten Punktwolke maximiert.

Vorteilhaft ist es, wenn in Schritt c) eine Transformationsfunktion mit Hilfe numerischer Optimierungsverfahren erfasst wird.

Besonders vorteilhaft ist es, wenn in Schritt c) die Transformationsfunktion durch ein iteratives Newton-Verfahren ermittelt wird, umfassend folgende Teilschritte:

1) Ermitteln eines Anfangspunktes,
2) Bestimmen, zu welcher Zelle der Repräsentation der jeweilige Punkt der zweiten Punktwolke gehört,
3) Bestimmen, zu welcher Gruppe der Repräsentation der jeweilige Punkt der zweiten Punktwolke gehört,
4) Ermitteln des Scores, des Gradienten und der Hessenmatrix für die Punkte der zweiten Punktwolke in jeder Gruppe der Repräsentation,
5) Prüfen ob ein Abbruchkriteriums erfüllt ist, und
6) Erneutes Starten von Teilschritt 2) bis Teilschritt 5) bis das Abbruchkriterium erfüllt ist.

Die eigentliche Registrierung erfolgt durch eine Minimierung von *-score* ($T_n(P2)$) in Abhängigkeit von der schrittweise modifizierten Transformation $T_0,...,T_n$ mittels des Newton-Algorithmus. Hier wird nur auf die Punkte eingegangen, die bei dem beschriebenen Verfahren modifiziert werden. Der Algorithmus benötigt in Teilschritt 1) eine initiale Schätzung $T_0$, da er nur zum nächstmöglichen Minimum konvergiert.

In Teilschritt 2) kann die Bestimmung der Zelle / Zellen pro Punkt $p_{2_i}$ der zweiten Punktwolke P2 für die Registrierung in Abhängigkeit der Transformation $T_n$ wie das NDT-Verfahren wie weiter oben beschrieben erfolgen und ist natürlich abhängig von der gewählten Partition. Im einfachsten Fall wird die ONDT-Bereiche verwendet, bei der der Abstand zwischen transformierten Punkt $t_i = Tn(p_{2_i})$ und Zellenmitte am geringsten ist. Alternativ kann auch hier mittels Anpassung der Gewichte $w_{ij}$ zwischen benachbarter Zellen interpoliert werden. Die Ausgabe ist eine Menge $t_{ij}$ von transformierten Punkten inkl. derer Gewichte $w_{ij}$ welche Zelle $Z_j$ zugeordnet wurden.

In Teilschritt 3) wird für jeden Punkt $t_{ij}$ innerhalb der Zelle $Z_j$ nun die relevante(n) Normalverteilung(en) bestimmt. Dazu wird die Oberflächennormale $n_{ij}$ der Punkte $t_{ij}$ den vorhanden Ankerrichtungen (auch mehreren) $o_1,...,o_m$ der Zelle zugeordnet. Die Verfahren sind dabei dieselben wie in Teilschritt ii) des Schritts b) bei der Gruppierung, ebenfalls wird dasselbe Gewichtungsverfahren wie in Teilschritt ii) des Schritts b) herangezogen. Es gibt eine einzige Ausnahme, sollte in einer Gruppe $Z_{jo}$ keine Normalverteilung existieren (da es während der Konstruktion eine zu geringe Anzahl an zugeordneten Punkten innerhalb der Gruppe gab) wird das Gewicht $w_{ijo} = 0$ gesetzt. Als Ausgabe erhält man für jede Gruppe $Z_{jo}$ eine Menge von Punkten $t_{ijo}$ sowie deren zugehörigen Gewichte $w_{ijo}$.

In Teilschritt 4) zur Bestimmung von score, Gradient und Hessematrix anstatt nur über die Punkte $t_{ij}$ aller Zellen $Z_j$ bei dem NDT-Verfahren zu summieren, wird bei dem ONDT-Verfahren nach den Geleichungen (3), (4) und (5) über alle Punkte $t_{ijo}$ aller Gruppen $Z_{jo}$ aller Zellen $Z_j$ summiert und die jeweiligen Gewichte $w_{ij}$ in den entsprechenden Formeln mit $w_{ijo}$ multipliziert. Die nur von einem einzelnen Punkt $t_{ijo}$ abhängigen Gradient- und Hessegrößen $J_{ijno}$ und $H_{ijno}$ werden weiterhin wie das NDT-Verfahren gebildet.

Für die Newton-Minimierung wird sowohl der Gradient $J_n$ als auch die Hessematrix $H_n$ in Abhängigkeit der Transformation $T_n$ in Schritt $n$ benötigt. Hier lassen der Gradient $J_n$ und die Hessematrix $H_n$ wie folgt berechnen:

$$J_n = \sum_{t_{ijo}} w_{ij} \cdot w_{ijo} \cdot J_{ijno} \qquad (4)$$

$$H_n = \sum_{t_{ijo}} w_{ij} \cdot w_{ijo} \cdot H_{ijno} \qquad (5)$$

Dabei ist vorteilhaft, dass diese Größen für jeden Punkt $t_{ijno} = T_n(p2_{ijo})$ einer Gruppe $Z_{jo}$ unabhängig voneinander in $J_{ijno}$ und $H_{ijno}$ berechnet werden können und die gesuchten kumulierten Größen durch gewichtete Summation nach den Gleichungen (4) und (5) bestimmt werden können.

Die Gewichtungen $w_{ij}$ , $w_{ijo}$ entsprechen dabei denselben wie beim Score, sind allerdings abhängig von $T_n$. Im einfachsten Fall können die Gewichtungen $w_{ij}$ , $w_{ijo}$ als 1 angenommen werden.

In Teilschritt 5) wird die Iteration $T_0,...,T_n$ über die Newton-Minimierung durchgeführt bis zu einem Abbruchkriterium in Teilschritt 6) wie z. B. fixe Anzahl an Schritten, Änderung zwischen $T_{n-1}$ und $T_n$ unter einem Schwellwert etc. Die Transformation $T_n$ des letzten Schrittes sind die gesuchten Registrierungsparameter, *score* ($T(P2)$) entspricht der Registrierungs-Güte und aus der Hessematrix $H_n$ kann die Unsicherheit von $T_n$ für den Pose-Graph abgeleitet werden.

Bevorzugt ist das Verfahren, wenn ein Steuergerät für das Lokalisierungssystem zur Durchführung des beschriebenen Verfahrens eingerichtet ist.

Auch bevorzugt ist das Verfahren, wenn ein Computerprogramm eingerichtet ist, welches alle Schritte des Verfahrens ausführt.

Außerdem bevorzugt ist das Verfahren, wenn ein maschinenlesbares Speichermedium eingerichtet ist, auf dem das Computerprogramm gespeichert ist.

Besonders bevorzugt ist, wenn sich eine autonome Arbeitsmaschine nach dem oben beschriebenen Verfahren lokalisieren lässt.

Das Verfahren wird nachfolgend anhand der Figuren näher erläutert, wobei hierbei bevorzugte Ausführungsbeispiele gezeigt werden. Es zeigen:

Fig. 1: einen beispielhaften Mapping-Prozess durch ein Lokalisierungssystem auf Basis von Laserscannern,

Fig. 2: eine beispielhafte Repräsentation einer Punktwolke mittels des NDT-Verfahrens,

Fig. 3: eine weitere beispielhafte Repräsentation einer Punktwolke mittels des NDT-Verfahrens,

Fig. 4: eine beispielhafte Repräsentation einer Punktwolke mittels des ONDT-Verfahrens,

Fig. 5: eine beispielhafte Registrierung von Punktwolken mittels des NDT-Verfahrens,

Fig. 6: eine beispielhafte Bestimmung der Oberflächennormalen an den Punkten einer Punktwolke, und

Fig. 7: ein typisches Sequenzdiagramm zur Durchführung des beschriebenen Verfahrens.

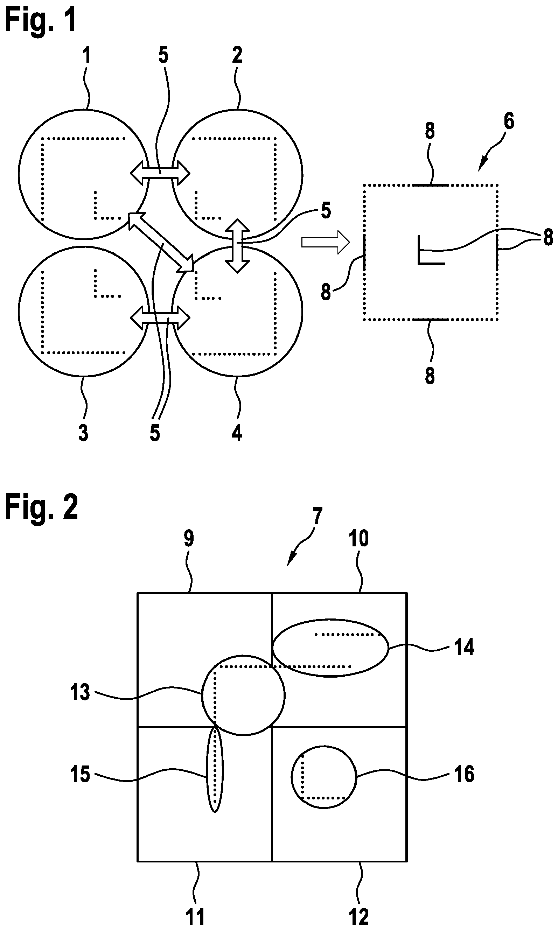

Fig. 1 zeigt einen beispielhaften Mapping-Prozess durch ein Lokalisierungssystem auf Basis von Laserscannern. Zuerst werden dem Lokalisierungssystem beispielweise durch eine Mapping-Fahrt vier Punktwolken 1, 2, 3, 4 von verschiedenen Orten der zu mappenden Umgebung zur Verfügung gestellt, von denen typischerweise zwar keine die Gesamtumgebung 6 erfasst, die sich aber als Bedingung zumindest teilweise überlappen. Das System führt mittels der überlappenden Regionen 8 eine paarweise Registrierung (siehe Doppelpfeile jeweils zwischen zwei Punktwolken) zwischen den verschiedenen Punktwolken 1, 2, 3, 4 durch und baut damit ein Netz 5 von paarweise verbunden Punktwolken 1, 2, 3, 4 auf.

In der Wissenschaft wird solch ein Modellierung als Pose-Graph bezeichnet, wobei Knoten Posen (=Position & Orientierung) mit annotierten Informationen (wie den Punktwolken 1, 2, 3, 4) darstellen und Kanten die Verknüpfungen dazwischen (wie den durch die Registrierung ermittelten Versatz inkl. deren Unsicherheiten). Mittels Optimierern für Pose-Graphen (z. B. [G2O]) können mittels der redundanten Informationen (sowie der verknüpften Unsicherheiten an den Kanten) innerhalb des Netzes 5 (siehe z. B. die Schleife Punktwolke (a) 1 <-> Punktwolke (b) 2 <-> Punktwolke (d) 4) die Fehler automatisiert minimiert werden und eine konsistente Karte entsprechend der Gesamtumgebung 6 berechnet werden.

Fig.2 zeigt eine beispielhafte Repräsentation der Punktwolke (e) 7 mittels des NDT-Verfahrens. Dazu werden die Punktwolke (e) 7 in ein Gitter zerlegt, welches aus vier uniformen Zellen 9, 10, 11, 12 besteht. In jeder Zelle 9, 10, 11, 12 wird eine Normalverteilung für die darin enthaltenen Punkte ermittelt, durch die ein NDT-Bereich 13, 14, 15, 16 in der jeweilige Zelle 9, 10, 11, 12 gebildet wird. Im NDT-Bereich 13, 14, 15, 16 kommt ein Punkt mit einer hohen Wahrscheinlichkeit vor, und zwar je näher der Mitte des NDT-Bereiches, desto höher ist die Wahrscheinlichkeit.

In der Fig. 2 wird gezeigt, dass während der NDT-Bereich (c) 15 an den Punkten innerhalb der Zelle (c) 11 gut anfittet, ist dies bei den anderen drei Zellen 9, 10, 12 nicht der Fall. In der Praxis entspricht die eckförmige Punktanordnung in der Zelle (a) 9 oder der Zelle (d) 12 häufig einer Außen- oder Innenecke und die zwei parallel linienförmigen Punktanordnungen in der Zelle (b) 10 häufig einer Außen- und Innenwand. Allerdings ist der zugehörige NDT-Bereich 13, 14, 16 kreis- oder ellipsenförmig und hat eine relativ große Fläche gegenüber den Punkten, daher kann der NDT-Bereich 13, 14, 16 die Außen-Innenecke und die Außen-Innenwand nicht genügend/präzis repräsentieren.

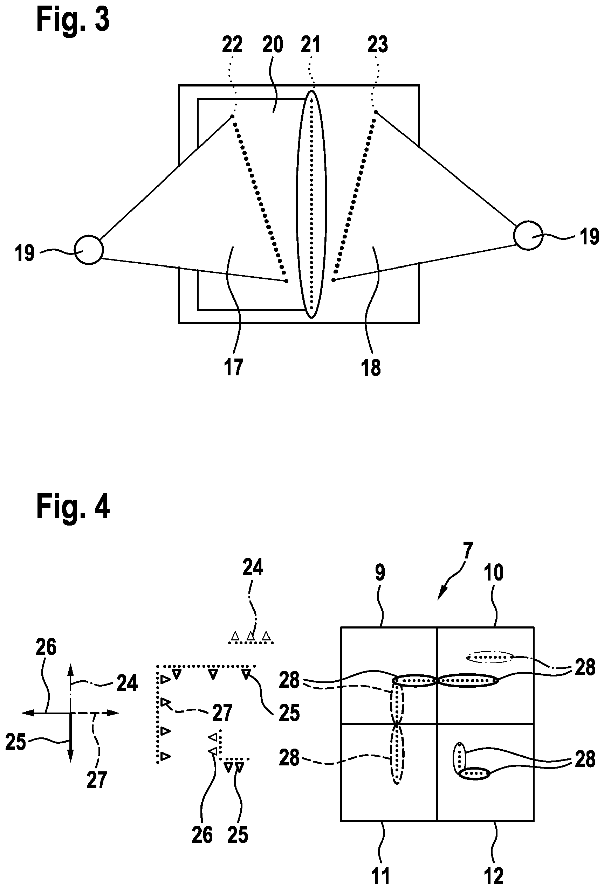

Fig. 3 zeigt eine beispielhafte Repräsentation der Punktwolke (f) 21 mittels des NDT-Verfahrens. Zu sehen ist die Punktwolke (f) 21 mit einem NDT-Bereich. Ein Laserscanner 19 erfasst von der Rückseite des Objektes 20 eine Punktwolke (g) 22 oder von der Vorderseite des Objektes 20 eine Punktwolke (h) 23. Dabei können die Punktwolke (g) 22 nach der Transformation (T1) 17 und die Punktwolke (h) 23 nach der Transformation (T2) 18 mit ähnlich gutem Score an die Punktwolke (f) 21 registriert werden, wenn der Laserscanner 19 mit spiegelsymmetrischer Pose von gegenüberliegenden Seiten das Objekt 20 scannt. Die Erfassung bzw. Registrierung der Punktwolke (g) 22 ist hier physikalisch wenig sinnvoll. In der Praxis führt diese Problematik z. B. dazu, dass bei der Verwendung der klassischen NDT versehentlich während des Mappings eine Innenwand auf eine Außenwand gelegt wird und die Karte daher Fehler enthält.

Fig. 4 zeigt eine beispielhafte Repräsentation der Punktwolke (e) 7 mittels des ONDT-Verfahrens. Hierbei ist die Punktwolke (e) 7 wie in Fig. 2 dargestellt. Doch im Unterschied dazu werden hier zusätzlich vier unterschiedliche Oberflächennormalen 24, 25, 26, 27 an den Punkten der Punktwolke (e) 7 dargestellt.

Die Punktwolke (e) 7 wird wie in Fig. 2 beschrieben in Zellen 9, 10, 11, 12 zerlegt. Doch im Unterschied dazu werden hier die Punkte in jeder Zelle 9, 10, 11, 12 weiter nach ihren Obernflächennormalen 24, 25, 26, 27 gruppiert, wobei die Punkte in jeder Gruppe eine gleiche Oberflächennormale 24, 25, 26, 27 aufweisen. Anstatt die Normalverteilung in Fig.2 für die Punkte in jeder Zelle 9, 10, 11, 12 zu ermitteln, wird hier die Normalverteilung für die Punkte in jeder Gruppe ermittelt. Somit ergeben sich insbesondere anstatt eines NDT-Bereiches jeweils zwei ONDT-Bereiche 28 in Zelle (a) 9, Zelle (b) 10 und Zelle (d) 12.

Im Vergleich mit dem NDT-Bereich 13, 14, 16 in Fig. 2 weis der jeweilige ONDT-Bereich 28 eine viel schmaler Fläche auf, in welcher ein Punkt mit einer hohen Wahrscheinlichkeit vorkommt. Somit repräsentiert ONDT präziser als NDT die Szene.

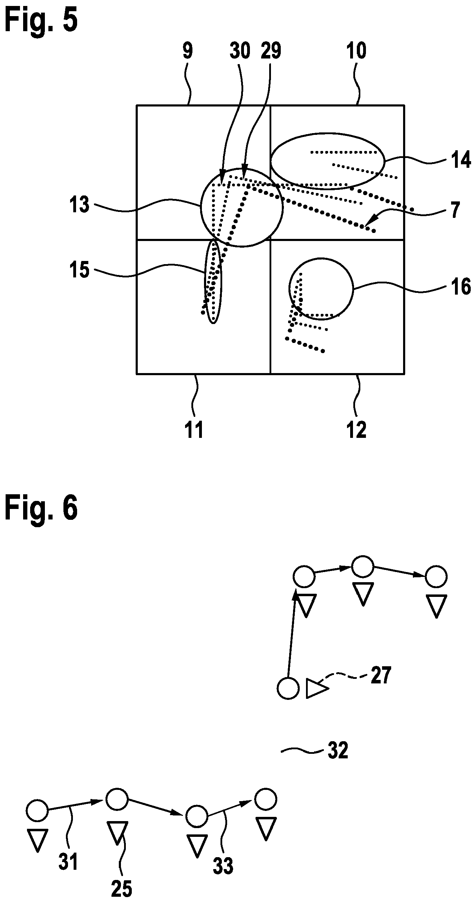

Fig. 5 zeigt eine beispielhafte Registrierung von Punktwolken mittels des NDT-Verfahrens. Die Registrierung wird durch das Newtonverfahren schrittweise durchgeführt. Zur vereinfachten Darstellung wird in Fig. 5 gezeigt, dass die Punktwolke (e) 7 in zwei Schritten an den NDT-Bereichen 13, 14, 15, 16 transformiert wird. Somit sind der Punktwolkentransformation-Schritt (a) 29 und der Punktwolkentransformation-Schritt (b) 30 vorgesehen.

Der Punktwolkentransformation-Schritt (a) 29 zeigt, dass es noch viele Punkte geben, die sich beispielsweise nicht im NDT-Bereich (b) 14 und NDT-Bereich (d) 16 befinden, sodass sich ein schlechter bzw. klein Score ergibt. Zum Gegenteil zeigt der Punktwolkentransformation-Schritt (b) 30, dass sich alle Punkte in allen NDT-Bereichen 13,14,15,16 befinden. Somit ergibt sich ein maximaler Score und die Registrierung ist erfolgreich abgeschlossen.

Fig. 6 zeigt eine beispielhafte Bestimmung der Oberflächennormalen 25, 27 an den Punkten einer Punktwolke. Für jeden Punkt wird gemäß dem Scanvorgang sein nachfolgender Punkt bestimmt und der Tangentialvektor 31 zwischen den beiden Punkten gebildet. Die Oberflächennormalen 25, 27 steht senkrecht auf dem zugehörigen Tangentialvektor 31 und richtet sich in Richtung des Sensorursprunges aus. Bei einem Sprung 32 kann auch der Vorgänger gewählt werden, falls dieser sich näher am Bezugspunkt befindet (siehe den Fall von Sprung-Tangentialvektor 33) als der Nachfolger.

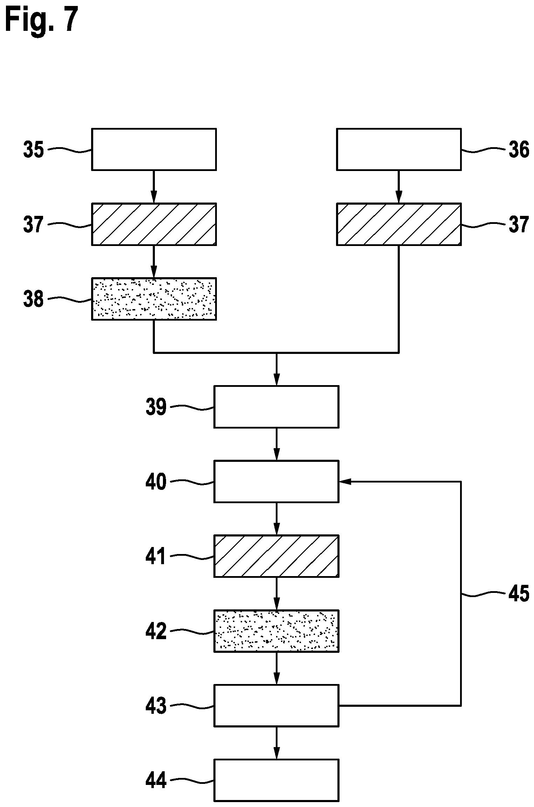

Fig. 7 zeigt ein typisches Sequenzdiagramm 34 zur Durchführung des beschriebenen Verfahrens. Dabei zeigt es die leeren Kästen 35, 36, 39, 40, 43, 44 sowie die Schleife 45 zur Darstellung der Schritte eines normalen NDT-Verfahrens, die gestrichelten Kästen 37, 41 zur Darstellung von zusätzlich neuen Schritten eines ONDT-Verfahrens, und die gepunkteten Kästen 38, 42 zur Darstellung von abweichenden Schritten zwischen dem NDT-Verfahren und dem ONDT-Verfahren.

Vor allem wird in Schritt (S1) 37 die Oberflächennormale für jeden Punkt der ersten Punktwolke 35 und der zweiten Punktwolke 36 bestimmt. Dann wird in Schritt (S2) 38 die erste Punktwolke 35 mittels des ONDT-Verfahrens repräsentiert.

Zur Registrierung wird in Schritt (S3) 39 ein Angangspunkt $T_0$ für die Durchführung des iterativen Newton-Verfahrens ermittelt. Je nach einer schrittweisen Transformation der zweiten Punktwolke 36 wird in Schritt (S4) 40 bestimmt, zu welcher Zelle der ONDT-Repräsentation der jeweilige Punkt der zweiten Punktwolke 36 gehört. Und weiter wird in Schritt (S5) 41 bestimmt, zu welcher Gruppe der ONDT-Repräsentation (d. h. ONDT-Bereich) der jeweilige Punkt der zweiten Punktwolke 36 gehört. Und dann wird in Schritt (S6) 42 der Score, der Gradient und die Hessematrix für die Punkte der zweiten Punktwolke 36 in jeder Gruppe der ONDT-Repräsentation ermittelt. In Schritt (S7) 43 wird gemäß den in Schritt (S6) 42 ermittelten Werten überprüft, ob das Abbruchkriterium erfüllt wird. Wenn nicht, wird die Schleife 45 von Schritt (vi) 40 bis Schritt (vii) 43 solange wiederholt durchgeführt, bis das Abbruchkriterium erfüllt wird. Und dann wird der Registrierungsprozess in Schritt (S8) 44 erfolgreich abgeschlossen.

Bezugszeichenliste

1    Punktwolke (a)
2    Punktwolke (b)
3    Punktwolke (c)
4    Punktwolke (d)

5 Netz
6 Gesamtumgebung
7 Punktwolke (e)
8 überlappende Region
9 Zelle (a)
10 Zelle (b)
11 Zelle (c)
12 Zelle (d)
13 NDT-Bereich (a)
14 NDT-Bereich (b)
15 NDT-Bereich (c)
16 NDT-Bereich (d)
17 Transformation (T1)
18 Transformation (T2)
19 Laserscanner
20 Objekt
21 Punktwolke (f)
22 Punktwolke (g)
23 Punktwolke (h)
24 Oberflächennormale (a)
25 Oberflächennormale (b)
26 Oberflächennormale (c)
27 Oberflächennormale (d)
28 ONDT-Bereich
29 Punktwolkentransformation-Schritt (a)
30 Punktwolkentransformation-Schritt (b)
31 Tangentialvektor
32 Sprung
33 Sprung-Tangentialvektor
34 Sequenzdiagram
35 erste Punktwolke
36 zweite Punktwolke
37 Schritt (S1)
38 Schritt (S2)
39 Schritt (S3)
40 Schritt (S4)
41 Schritt (S5)
42 Schritt (S6)
43 Schritt (S7)
44 Schritt (S8)
45 Schleife

**Patentansprüche**

1. Verfahren zur Reduzierung von Mehrdeutigkeiten bei der Repräsentation und Registrierung von Punktwolken (35, 36), wobei die Punktwolken (35, 36) von mindestens einem Laserscanner (19) erzeugt oder aus einer Navigationskarte extrahiert werden, und wobei jeweils eine erste Punktwolke (35) und eine zweite Punktwolke (36) als Eingangsgrößen empfangen werden, umfassend zumindest folgende Schritte:

    a) Bestimmen von Oberflächennormalen (24, 25, 26, 27) an den Punkten der ersten Punktwolke (35) und an den Punkten der zweiten Punkwolke (27),
    b) Bestimmen einer Repräsentation der ersten Punktwolke (35) umfassend folgende Teilschritte:

        i) Unterteilen der ersten Punktwolke (35) in Zellen (9, 10, 11, 12),
        ii) Gruppieren der Punkte der jeweiligen Zelle (9, 10, 11, 12) auf Basis der Oberflächennormalen (24, 25, 26, 27) an den Punkten der ersten Punktwolke (35),
        iii) Ermitteln der Normalverteilung für die Punkte der jeweiligen Gruppe in jeder Zelle, und

c) Registrieren der zweiten Punktwolke (36) an die ersten Punktwolke (35) auf Basis der Repräsentation.

2. Verfahren nach Anspruch 1, wobei in Schritt a) eine Oberflächennormale (24, 25, 26, 27) an jeden Punkt der ersten Punktwolke (35) und/oder der zweiten Punktwolke (36) bestimmt wird, wobei die Oberflächennormale (24, 25, 26, 27) eines Punktes derart bestimmt wird, dass die Oberflächennormale (24, 25, 26, 27) des Punktes senkrecht zum Tangentialvektor (31) des Punktes steht, welcher ausgehend von diesem Punkt zu seinem nachfolgenden Punkt ausgerichtet ist.

3. Verfahren nach Anspruch 1 oder 2, wobei in Teilschritt ii) die Punkte der jeweiligen Zelle (9, 10, 11, 12) derart gruppiert werden, dass ein Orientierungsraum gleichförmig in verschieden Ankerrichtungen in Teilorientierungsräume unterteilt wird, und die Punkte auf Basis ihrer Oberflächennormalen (24, 25, 26, 27) in verschiedene Teilorientierungsräume aufgeteilt werden.

4. Verfahren nach Anspruch 3, wobei in Teilschritt ii) der jeweilige Punkt basierend auf Winkeldistanzen zwischen seiner Oberflächennormale (24, 25, 26, 27) und Ankerrichtungen in mindestens einen Teilorientierungsraum aufgeteilt wird.

5. Verfahren nach einem der vorhergehenden Ansprüche, wobei in Teilschritt iii) ein Mittelwert und eine Kovarianzmatrix für die Punkte der jeweiligen Gruppe ermittelt werden.

6. Verfahren nach einem der vorhergehenden Ansprüche, wobei in Schritt c) für jede in Teilschritt (iii) ermittelte Normalverteilung eine Bewertungsfunktion ermittelt wird, welche die Güte der Registrierung liefert.

7. Verfahren nach einem der vorhergehenden Ansprüche, wenn in Schritt c) eine Transformationsfunktion mit Hilfe numerischer Optimierungsverfahren ermittelt wird.

8. Verfahren nach Anspruch 7, wobei in Schritt c) die Transformationsfunktion durch iteratives Newton-Verfahren ermittelt wird, umfassend folgende Teilschritte:

   1) Ermitteln eines Anfangspunktes,
   2) Bestimmen, zu welcher Zelle (9, 10, 11, 12) der Repräsentation der jeweilige Punkt der zweiten Punktwolke (36) gehört,
   3) Bestimmen, zu welcher Gruppe der Repräsentation der jeweilige Punkt der zweiten Punktwolke (36) gehört,
   4) Ermitteln des Scores, eines Gradienten und einer Hessenmatrix für die Punkte der zweiten Punktwolke (36) in jeder Gruppe der ONDT-Repräsentation,
   5) Prüfen ob ein Abbruchkriterium erfüllt ist, und
   6) Erneutes Starten von Teilschritt 2) bis Teilschritt 5) bis das Abbruchkriterium erfüllt ist.

9. Verfahren nach Anspruch 8, wobei die letzte bekannte Position als der Anfangspunkt verwendet wird.

10. Steuergerät für ein Lokalisierungssystem, welches zur Durchführung eines Verfahrens nach einem der vorhergehenden Ansprüche eingerichtet ist.

11. Computerprogramm, welches eingerichtet ist, alle Schritte des Verfahrens nach einem der Ansprüche 1 bis 11 auszuführen.

12. Maschinenlesbares Speichermedium, auf dem das Computerprogramm nach Anspruch 11 gespeichert ist.

13. Autonome Arbeitsmaschine, welche sich mittels des Verfahrens nach einem der vorhergehenden Ansprüche 1 bis 10 lokalisieren lässt.

## Fig. 1

## Fig. 2

# Fig. 3

# Fig. 4

# Fig. 5

# Fig. 6

# Fig. 7

Europäisches
Patentamt

European
Patent Office

Office européen
des brevets

**EUROPÄISCHER RECHERCHENBERICHT**

Nummer der Anmeldung

EP 21 16 6879

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SCHMIEDEL THOMAS ET AL: "IRON: A fast interest point descriptor for robust NDT-map matching and its application to robot localization", 2015 IEEE/RSJ INTERNATIONAL CONFERENCE ON INTELLIGENT ROBOTS AND SYSTEMS (IROS), IEEE, 28. September 2015 (2015-09-28), Seiten 3144-3151, XP032832080, DOI: 10.1109/IROS.2015.7353812 [gefunden am 2015-12-11] * das ganze Dokument * ----- | 1-13 | INV. G01S17/89 G01S17/931 G05D1/00 |
| A | US 2020/080860 A1 (HUANG HONG [CN] ET AL) 12. März 2020 (2020-03-12) * Absätze [0007] - [0036], [0046] - [0079] * ----- | 1-13 | |

| RECHERCHIERTE SACHGEBIETE (IPC) |
|---|
| G01S G05D |

Der vorliegende Recherchenbericht wurde für alle Patentansprüche erstellt

| Recherchenort | Abschlußdatum der Recherche | Prüfer |
|---|---|---|
| München | 13. August 2021 | Köppl, Martin |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes
  Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 21 16 6879

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-08-2021

| Im Recherchenbericht angeführtes Patentdokument | Datum der Veröffentlichung | Mitglied(er) der Patentfamilie | Datum der Veröffentlichung |
|---|---|---|---|
| US 2020080860 A1 | 12-03-2020 | US 2020080860 A1<br>WO 2019136714 A1 | 12-03-2020<br>18-07-2019 |

EPO FORM P0461

Für nähere Einzelheiten zu diesem Anhang : siehe Amtsblatt des Europäischen Patentamts, Nr.12/82